# EUROPEAN PATENT SPECIFICATION

(11) **EP 1 584 390 B1**
(45) Date of publication and mention of the grant of the patent: **24.11.2010**
(21) Application number: 05007199.2
(22) Date of filing: 01.04.2005
(51) Int. Cl.: B23C 5/10, B23C 5/20

(54) **Throwaway insert and throwaway-type rotary cutting tool**
Schneideinsatz und rotierendes Schneidewerkzeug dafür
Plaquette de coupe et outil de coupe rotatif

(30) Priority: 06.04.2004 JP 2004112078; 08.03.2005 JP 2005063937
(43) Date of publication of application: 12.10.2005
(60) Divisional application: 09162274.6
(73) Proprietor: MITSUBISHI MATERIALS CORPORATION, Chiyoda-ku Tokyo 100-8117 (JP)
(72) Inventor: Daiguji, Hisashi, Yuuki-gun Ibaraki-ken (JP)
(74) Representative: HOFFMANN EITLE

(56) References cited:
- EP-A- 0 392 730
- EP-A- 0 457 488
- EP-A- 0 585 800
- EP-A- 0 956 921
- EP-A- 1 344 595
- DE-A1- 10 336 616
- US-A1- 2002 192 041
- US-A1- 2005 089 379

## Description

### BACKGROUND OF THE INVENTION

### 1. Field of the Invention

The present invention relates to a throwaway insert (hereinafter, simply referred to as "an insert") which is mounted to a tool body of a throwaway-type rotary cutting tool (hereinafter, simply referred to as "a rotary cutting tool) to constitute cutting edges of the rotary cutting tool, and a rotary cutting tool having such an insert mounted thereto.

### 2. Description of the Related Art

As this type of insert and rotary cutting tool, for example, a cutting insert (insert) comprising at least one cutting edge (a main cutting edge) defined between a rake face and a relief face of the insert, and a rotary milling machine (a rotary cutting tool) having a cylindrical holder (a tool body) and such a cutting insert are proposed in Japanese Unexamined Patent Application Publication No. 2-298414. In this cutting insert, the rake face and the relief face is continuously curved. As a result, a rake angle and a relief angle which are defined with respect to the cylindrical holder, that is, which are defined with the insert mounted to the tool body, are made invariable along the length of the cutting edge. Further, the inventor of the present invention proposes an insert and a rotary cutting tool having such an insert mounted thereto in Japanese Unexamined Patent Application Publication No. 2003-334716. In this insert, a main cutting edge is formed so as to be connected to one end of a cutting edge of a nose formed at a corner of a rake face. The main cutting edge has a tapered cutting edge connected to one end of the cutting edge of the nose, and a curved cutting edge connected to a joint point at one end of the tapered cutting edge opposite to the nose. The curved cutting edge is formed so as to be included on a predetermined cylindrical face with a rotation axis of a tool body as a center axis in a state in which the insert is mounted to the tool body such that the nose is positioned at the outer side of a distal end of the tool, and the tapered cutting edge is formed to extend inward from the cylindrical face as it approaches the nose from the curved cutting edge.

However, in the insert and rotary cutting tool disclosed in Japanese Unexamined Patent Application Publication No, 2-298414, the cutting edge is curved, and a curved side portion of a plane which intersects a cylinder constituting a cylindrical surface of the cutting edge is formed at an angle corresponding to an axial rake angle of the insert in a milling cutter. In other words, the main cutting edge is formed to be positioned on an intersecting ridgeline of the cylindrical surface of the rotary cutting tool about its rotating axis and a plane which intersects the cylindrical surface so as to form the constant axial rake angle. Thus, the main cutting edge has a shape of a straight line in side view as seen from the direction along the plane so as to form the constant axial rake angle with the insert mounted to the tool body. For this reason, the chips produced by the main cutting edge flows out onto the rake face while entirely abutting it, which makes it difficult to separate chips and cause an increase in cutting resistance. In particular, when a high ductile metal material such as aluminum is intended to be cut at high speed, a portion of the metal material positioned further outside than the cylindrical surface at a distal end of the main cutting edge (at the nose in Japanese Unexamined Patent Application Publication No. 2003-334716) is plucked off so as to be pulled out by chips which is hard to be separated. As a result, the rotation locus of the main cutting edge does not become a cylindrical surface about the rotation axis of the rotary cutting tool precisely, but the chips tend to be generated toward the outer peripheral side beyond the cylindrical surface instead, but the verticalness of a vertically machined surface may be deteriorated instead.

However, according to the insert and rotary cutting tool disclosed in the Japanese unexamined Patent Application Publication No. 2003-334716. the tapered cutting edge is formed to retreat inward from the cylindrical surface including the curved cutting edge as it approaches the nose. Thus, even when a material with such high ductility is cut at high speed, a portion of the material which is positioned at the outer peripheral side of the nose at the distal end of the insert is plucked off so as to be pulled out with the discharge of chips at other portions, thereby suppressing a tendency that the distal end of the insert bites into the workpiece toward the outer peripheral side. As a result, it is possible to cut a vertically machined surface with high surface quality. Further, Japanese Un examined Patent Application Publication No. 2003-334716 discloses a construction in which the curved cutting edge is formed such that the distance of the curved cutting edge from the bottom face (mounting face) of the insert gradually decreases as it goes away from the nose while protruding forward in the rotating direction of the tool body. As a result, it is possible to satisfactorily separate chips even for the high ductile metal as described above and thereby to perform high-speed cutting.

Meanwhile, as disclosed in Japanese Unexamined Patent Application Publication Nos. 2-298414 and 2003-334716, in the insert in which the main cutting edge and the curved cutting edge of the main cutting edge is constructed to be included on the cylindrical surface with the rotation axis of the tool body of the rotary cutting tool as a center axis, the insert is not preciously mounted to the tool body, because the projection line obtained by projecting the rotation locus of the curved cutting edge about the axis onto the plane including the axis is positioned to be inclined with respect to the cylindrical surface to include the curved cutting edge without precisely including the curved cutting edge on the cylindrical surface, there is a problem in that the precision of a vertically machined surface may deteriorate. In particular, if the curved cutting edge is not positioned so as to be included on the cylindrical surface as such, for example, when the rotary cutting tool is moved toward the distal end in the rotating axis thereof step by step by the length of the cutting edge to perform cutting in forming a vertically machined surface which is deeper than the effective cutting edge length of the main cutting edge, it is possible to give high surface quality to individual vertically machined surfaces to be cut at each stage. However, step difference become conspicuous at a joint between adjacent vertically machined surfaces, which requires a finishing process after cutting. When the tool body, for example, to be bent during cutting, this is also true of a case in which the cylindrical surfaces to include the curved cutting edge during cutting at each stage coincides with each other.

Further, in the insert disclosed in Japanese Unexamined Patent Application Publication No. 2003-334716. The curved cutting edge and the tapered cutting edge is connected to each other so that respective tangential lines form a predetermined angle at a joint point between the curved and tapered cutting edges. As a result, chips formed by both the cutting edges are grown in different directions from the joint point as a boundary are easily separated from each other. Therefore, the chips formed by the curved cutting edge can further prevent the material positioned at the outer peripheral side of the nose from being pulled out. On the contrary, if the curved cutting edge is not preciously positioned so as not to be included on the cylindrical surface, there is a problem in that the joint between the vertically machined surfaces when the rotary cutting tool is moved step by step in the axial direction to perform cutting tends to be conspicuous. Moreover, the curved cutting edge is formed such that the distance thereof from the bottom face (mounting face) of the insert gradually decreases as the curved cutting edge goes away from the nose while the curved cutting edge protrudes forward in the rotating direction of the tool body. As a result, Japanese Unexamined Patent Application Publication No. 2003-334716 discloses a construction in which chip separation is improved even for the above-described high ductile metal to perform high-speed cutting. However, in order to allow higher speed cutting, further improvement of the chip separation is expected.

A further prior art document EP 1 344 595 A2 is known. This document refers to a throwaway insert which is attached to a throwaway rotating cutting tool, for example an end mill or the like. This throwaway insert comprises a rake angle which only increases as the distance from the nose portion decreases. Further, a main cutting edge portion (62) of said insert is curved to coincide with a portion of a substantially imaginary cylindrical surface. Details regarding the shape of the prior art cutting insert are best understood from the drawings of EP 1 344 595 A2.

In particular this document discloses a throwaway insert having an insert body (1) which defines a substantially polygonal flat plate shape, as seen from the top, the throwaway insert including:
a rake face which is formed on a first polygonal surface of the insert body (1),
- a corner cutting edge which is formed at a corner of the rake face and has a substantial arcuate shape, as seen from the top, facing the first polygonal surface of the insert body (1),
a main cutting edge which is formed at a side ridge of the rake face connected to one end of the corner cutting edge, and
a relief face which is constituted by a side face of the insert body,
the throwaway insert being mounted to a tool body which is to be rotated about an axis such that the rake face faces forward in a rotating direction of a tool, the corner cutting edge is positioned at an outer periphery of a distal end of the tool body, and the main cutting edge extends rearward in the rotating direction of the tool body as the main cutting edge approaches the rear end of the tool body at the outer periphery of the tool body,
wherein the rake face connected to the main cutting edge comprises an inclined face which is inclined inward toward the second polygonal surface of the insert body serving as a seat face to seat on the tool body,
wherein a rake angle which is formed in cross-section by the rake face and the radius between the axis and the main cutting edge , with the insert mounted to the tool body, gradually increases from one end of the main cutting edge toward the other end thereof,
wherein the main cutting edge is formed in a shape of a convexly curved line which protrudes toward the outside of the rake face, as seen from the top, and a shape of another convexly curved line which extends toward the seat face while being convexly curved from the one end of the main cutting edge to the other end thereof as seen from the side facing the relief face, and
wherein, with the insert mounted to the tool body, a projection line of a rotation locus of the main cutting edge about the axis forms a shape of a cylindrical surface having its center line corresponding to the axis and which gradually retreats inward from the cylindrical surfac as it approaches one end of the main cutting edge.

### SUMMARY OF THE INVENTION

The present invention has been made under the above considerations. Accordingly, it is an object of the present invention to provide an insert and a rotary cutting tool which can make a joint (seam line) between individual vertically machined surfaces inconspicuous, even when a rotary cutting tool is moved step by step to form a deep and vertically machined surface. Thereby, high precision and high surface quality over the entire vertically machined surface can be obtained, and the chip separation can be improved thereby allowing higher cutting speed.

In order to solve the problems and achieve the objects, the present invention provides a throwaway insert according to claim 1. Further preferred embodiments are mentioned in the dependent claims.

As described above, a main cutting edge is not included on a cylindrical surface about a rotation axis of a tool body of the rotary cutting tool, but a projection line (a projection line projected onto a plane including an axis) of a rotation locus of the main cutting edge about the axis is formed in a shape of a convexly curved line, as seen from the top, which smoothly comes, at a middle portion of the main cutting edge, into contact with a cylindrical surface and which retreats inward from the cylindrical surface toward both ends of the main cutting edge. Even if the insert is mounted to a tool body with the main cutting edge inclined from a predetermined position, the projection line itself to be transferred to a vertically machined surface does not vary as long as the inclination of the main cutting edge extends in a direction along a convex arc defined by the projection line. On the other hand, as described above, a joint between vertically machined surfaces when the rotary cutting tool is moved step by step in the axial direction to perform cutting, has a chevron-shaped section with the overlap between the arcuate projection line and another arcuate projection line obtained by shifting and transferring the convex arcuate projection line in the axial direction. However, the radius of an arc defined by the projection line is set to be large, so that the height of the chevron can be suppressed so as not to be conspicuous, and the respective vertically machined surfaces can be a surface more approximate to a flat face. Moreover, even if the cylindrical surfaces do not coincide with each other due to bending of the tool body when the rotary cutting tool is moved step by step in that manner, the joint therebetween does not become large. As a result, it is possible to obtain a vertically machined surface with high precision and high surface quality without any conspicuous joint.

Further, from the one end of the main cutting edge as seen from the side facing the rake face, the main cutting edge is formed in a shape of a convexly curved line which extends toward the seat face while being convexly curved to the other end of the main cutting edge. Accordingly, the rake face connected to the main cutting edge is also formed in a shape of a convexly curved line, which is convexly curved similarly to the main cutting edge. In addition to the above, the main cutting edge is formed in a shape of a convexly curved line, as also seen from the top, such that the projection line of the main cutting edge forms a convexly arcuate shape. Thus, when a vertically machined surface is cut by the main cutting edge, a chip, which is largely curved in a recessed shape with the transcription of the projection line, flows out onto the convexly curved rake face. Accordingly, it is possible to easier separate chips from the rake face and discharge them rapidly. It is also possible to further promote high-speed cutting and thus to remarkably improve the cutting efficiency. Moreover, the main cutting edge, which extends toward the seat face while being convexly curved from the one end of the main cutting edge to the other end of the main cutting edge, is mounted so as to extend rearward in the rotating direction as it approaches the rear end of the tool body. Therefore, it is possible to increase the axial rake angle at the other end of the main cutting edge, i.e., at the rear end of the tool which is used at the time of deep cutting. Even when a wide chip is produced at the time of such deep cutting, it is possible to maintain an excellent chip separation property.

Moreover, in the insert of the present invention, the rake face connected to the main cutting edge can be formed to have an inclined face which is inclined inward from the main cutting edge close to the seat face, and the rake angle of the rake face which is formed with respect to the main cutting edge with such an insert mounted to the tool body of the rotary cutting tool is set to be a positive angle. In this case, the inclination angle of the inclined face of the rake face with respect to the seat face of the insert body gradually decreases from the one end of the main cutting edge toward the other end thereof, and the rake angle defined by the rake face with the insert mounted to the tool body gradually decreases from the one end of the main cutting edge toward the other end thereof and then gradually increases. Thus, as described above, it is possible to prevent the main cutting edge, which is inclined rearward in the rotating direction as it approaches the rear end of the tool body, from being remarkably different at one end thereof at the distal end of the tool and at the other end thereof at the rear end of the tool. Further, the rake face can be convexly curved along the main cutting edge inside the rake face, as described above, such that a portion between both ends of the main cutting edge protrudes even more. Thus, it is possible to further improve a chip separation property.

In addition, for example, when a bottom face is formed at the bottom of the vertically machined surface so as to be orthogonal thereto, the retreat amount, by which both ends of the projection line of the main cutting edge retreat inward from the cylindrical surface, is set such that the retreat amount of the one end of the main cutting edge is smaller than that at the other end of the main cutting edge, which is positioned at the outer peripheral side of the rear end of the tool body. Thereby, the retreat amount, by which the vertically machined surface at the bottom face retreats inward from the cylindrical surface, becomes small, as well. Thus, it is possible to form the surroundings of a corner, where the vertically machined surface and the bottom face intersect with each other into a shape closer to an orthogonal intersection, and it is possible to obtain a machined surface with higher quality. Further, if the surface inside of an inclined face of the rake face is formed with a recessed surface which has a section of a concave arc and which is recessed from the inclined face toward the seat face around the inner periphery of the rake face with equal spacing from the main cutting edge, it is possible to more reliably and easily separate chips at a place where the chips which have flown on the rake face reaches the recessed surface. On the other hand, the relief face connected to the main cutting edge comprises a first relief face which is connected to the main cutting edge and is inclined to gradually retreat toward the seat face, and a second relief face which is connected the first relief face on the seat face side and is inclined to gradually retreat at a larger inclination angle than the first relief face, and the first and second relief faces are formed so as to extend toward the seat face while being convexly curved from the one end of the main cutting edge toward the other end thereof as seen from the side. As a result, when the rake face is formed to have an inclined face as described above, it is possible to secure an edge point angle of the main cutting edge by the first relief face whose relief angle becomes small and thereby to prevent the occurrence of loss, breaking, etc. It is also possible to sufficiently secure the clearance amount between the vertically machined surfaces which are formed by the main cutting edge by the second relief face having a larger relief angle than the first relief face. Moreover, the first and second relief faces are formed so as to be convexly curved as seen from the side similarly to the main cutting edge. Thus, it is possible to stabilize the widths of the first and second relief faces over the entire length of the main cutting edge and thereby to prevent a situation that lacks in the clearance amount. Further, such an insert is generally manufactured by compressing a source powder for an insert such as cemented carbide within a cavity defined by an inner peripheral surface of the die and the punching surfaces, to form a green compact by inserting upper and lower punches having punching surfaces respectively conformed to the shape of a rake face and a seat face into a press metal die having an inner peripheral surface conformed to the shape of a relief face, and by sintering the green compact. In this case, if such first and second relief faces are formed on the relief face, the source powder is densely compressed by the inner peripheral surface of the die which forms the second relief face of the green compact and the outer peripheral portion of the punching surface of the upper punch which formed the rake face. As a result, it is possible to suppress sintering deformation of the main cutting edge when the green compact formed in that manner is sintered, and thereby to obtain an insert having, in particular, a high precision of the main cutting edge.

Also, when the relief face connected to the main cutting edge is formed with the first and second relief faces in that manner, at least the one end of the main cutting edge is formed with a planar third relief face which is connected to the second relief face on the seat face side and extends perpendicularly to the seat face. Thereby, for example, as compared to a case in which a rake face is simply formed to gradually retreat from the first relief face toward the seat face as it approaches the seat face, it is possible to secure a larger thickness by virtue of side faces of the insert body at a portion of the second relief face immediately adjacent to the seat face. Accordingly, it is possible to secure particularly high cutting edge strength at one end of the main cutting edge which is positioned forward in the rotating direction of the with the insert mounted to the insert main body and which bites into a workpiece for the first time. It is also possible to prevent the one end of the main cutting edge and the corner cutting edge connected thereto from being broken due to an impact at the time of such biting. On the other hand, the rotary cutting tool having such an insert mounted thereon often performs a ramping process in which a groove or recess having an inclined bottom face is formed in a workpiece by feeding the tool body toward the distal end obliquely with respect to the axis. When the rotary cutting tool is used for such a ramping process, as for the above-mentioned insert, a side ridge of the rake face connected to the other end of the corner cutting edge, which is disposed at the distal end of the tool body, is formed with a sub-cutting edge extending from the other end of the corner cutting edge toward the inner periphery of the tool body with the insert mounted to the tool body, and a connecting portion which is connected to the sub-cutting edge, reaches the other corner of the rake face opposite to the corner having the corner cutting edge formed therein, and is recessed inward with respect to the extension line of the sub-cutting edge as seen from the top. Moreover, as for such an insert, as seen from the top, an angle of a tangential line touching both ends of the connecting portion formed with respect to the extension line of the sub-cutting edge is larger in a range of 5* to 20* than an angle at which a side ridge of the second polygonal surface located on the opposite side to the side ridge having the sub-cutting edge and the connecting portion formed therein is formed with respect to the extension line.

### BRIEF DESCRIPTION OF THE DRAWINGS

FIG. 1 is a plan view illustrating an insert according to an embodiment of the present invention;
FIG. 2 is a side view of the insert shown in FIG. 1;
FIG. 3 is a cross-sectional view taken along the line Z-Z in FIGS. 1 and 2;
FIG. 4 is an enlarged view illustrating surrounding parts of a main cutting edge 7 shown in FIG. 3;
FIG. 5 is a plan view illustrating a rotary cutting tool having the insert shown in FIG. 1 mounted thereto,
according to an embodiment of the present invention;
FIG. 6 is a side view of the rotary cutting tool shown in FIG. 5;
FIG. 7 is a front view of the rotary cutting tool shown in FIG. 5;
FIG. 8 is a view illustrating a projection line which is obtained by projecting a rotation locus of the main cutting edge 7 onto a plane including an axis 0 in a mounted state of the insert shown in FIG. 1;
FIG. 9 is cross-sectional views of an insert body 1 taken along the lines (A) X-X, (B) Y-Y and (C) Z-Z in
FIG. 6;

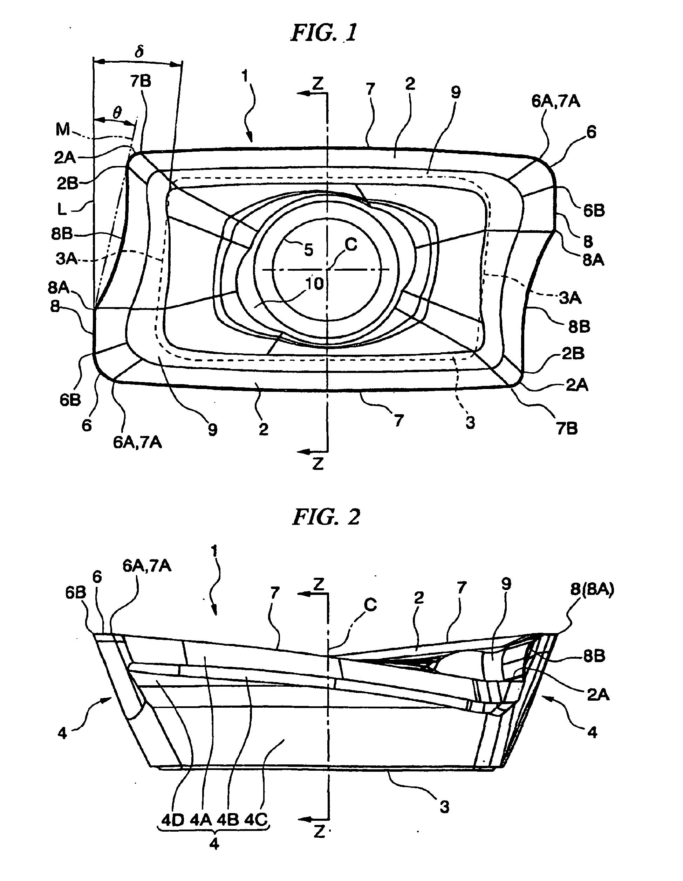

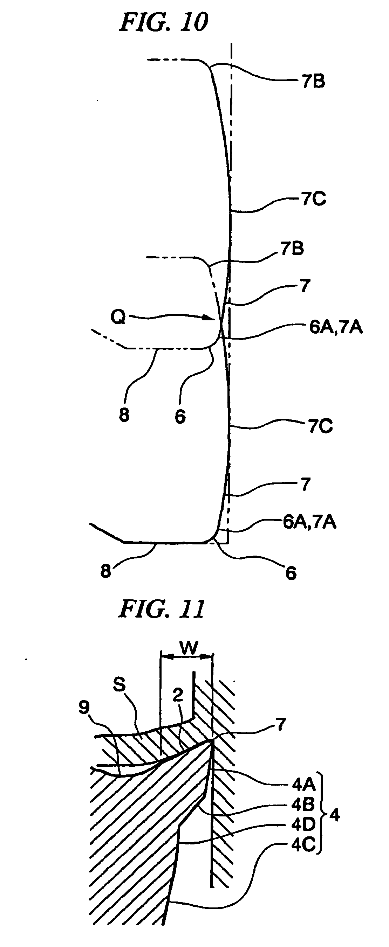

FIG. 10 is a view illustrating projection lines of the rotation locus of the main cutting edge 7 in the case of forming a vertically machined surface which is deeper than an effective cutting edge length, by using the rotary cutting tool having the insert shown in FIG. 1 mounted thereto; and
FIG. 11 is an enlarged cross-sectional view similar to the cross-sectional views taken along the line Z-Z in FIGS. 1 and 2, illustrating a chip S which is produced by the insert shown in FIG. 1.

### DESCRIPTION OF THE PREFERRED EMBODIMENTS

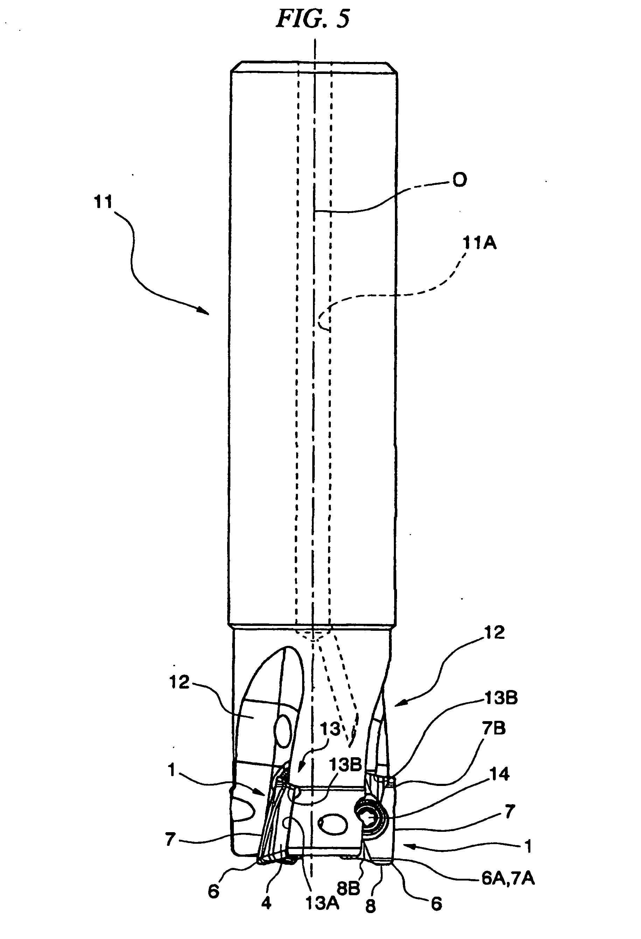

FIGS. 1 to 4 illustrate an embodiment of an insert of the present invention. FIGS. 5 to 9 illustrate an embodiment of a rotary cutting tool having the insert of the embodiment in FIGS. 1 to 4 mounted thereto. The insert of the present embodiment is a positive insert which comprises an insert body 1 which is made of a hard material such as cemented carbide, and is formed in a substantially quadrilateral shape, more specifically, in an oblong and substantially parallelogrammic flat plate shape, a rake face 2 which is formed at the outer peripheral side of the first parallelogrammic surface of the insert, a seat face 3 which is formed at the second parallelogrammic surface of the insert for allowing the rotary cutting tool to be seated on a tool body, which will be described later, and relief faces 4 which are formed at four sides. Cutting edges are formed at interesting ridgelines of the rake face 2 and the relief faces 4, and a relief angle with respect to the cutting edges is given the relief faces 4. Further, a mounting hole 5 having a circular section is formed at the center of both the parallelogrammic surfaces so as to pass through the insert body 1 in the direction of its thickness. The seat face 3 has a flush flat face which extends in a direction perpendicular to a center line C of the mounting hole 5, and the insert body 1 itself has a rotationally symmetrical shape of 180 DEG about the center line C. Among corners at the outer periphery of the rake face 2, corners which are positioned at acute ends of the first parallelogrammic surface are formed with corner cutting edges 6, serving as the cutting edges, which is formed in a substantially convex 1/4 are shape as shown in FIG. 1, as seen from the top facing the first parallelogrammic surface in the direction of the center line C. Moreover, a side ridge of the rake face 2 connected to one end 6A of each of the corner cutting edges 6 is formed with a main cutting edge 7, serving as the cutting edge, which extends along each of long sides of the first parallelogrammic surface, and the side ridge of the rake face 2 connected to the other end 6B of the corner cutting edge 6 is formed with a sub-cutting edge 8, also serving as the cutting edge, which extends along each of short sides of the first parallelogrammic surface. The main cutting edge 7 and the sub-cutting edge 8 are smoothly connected to the corner cutting edge 6 at its both ends 6A and 6B, respectively. In addition, the corner cutting edge 6, the main cutting edge 7 and the sub-cutting edge 8 are respectively formed with extremely narrow lands which are perpendicular to the center line C in a section orthogonal to the respective cutting edges. Further, a corner 2A which is positioned at each of obtuse ends of the first parallelogrammic surface having the rake face 2 formed therein are also formed in a substantially convex 1/4 arc shape as seen from the top. Here, the radius of the corner 24 is smaller than the radius of the convex arc defined by the corner cutting edge 6.

Here, the sub-cutting edge 8 is formed in a shape of a straight line which is perpendicular to a longitudinal direction (in the right-and-left direction in FIG. 1) of the insert body 1 as seen from the top, and extends on one plane perpendicular to the center line C together with the corner cutting edge 6. Further, a side ridge, which is opposite to the sub-cutting edge 8, extends to the obtuse end corner 2A from the other end 8A of the sub-cutting edge 8 defines a connecting portion 8B recessed so as to be concavely curved to the inside of the insert body 1 toward the corner 2A as seen from the top, and then extends perpendicularly to the longitudinal direction of the insert body 1 and reaches the corner 2A.

Accordingly, the connecting portion 8B is formed so as to be recessed inward with respect to an extension line L of the sub-cutting edge 8 as seen from the top. Also, in the present embodiment, as for a tangential line M which touches both ends of the connecting portion 8B as seen from the top, that is, a tangential line M which touches the other end 8A of the sub-cutting edge 8 and the end 2B of the corner 2A at the connecting portion 8B, an angle [theta] of the tangential line M formed with respect to the extension line L is set to be larger in a range of 5 DEG to 20 DEG than an angle delta at which a side ridge 3A located on the opposite side in the thickness direction to the side ridge of the rake face 2 having the sub-cutting edge 8 and the connecting portion 8B formed therein among side ridges of the second parallelogrammic surface of the insert body 1 which serves as the seat face 3 indicated by a broken line in FIG. 1 is formed with respect to the extension line L as seen from the top.

In addition, in the present embodiment, the connecting portion 8B intersects the sub-cutting edge 8 so as to be bent with an obtuse angle at the other end 8A of the sub-cutting edge 8 in plan view (the opposite end to the other end 6B of the corner cutting edge 6), and is recessed inward while forming a substantially concave arc from the other end 8A toward the corner 2A. Here, the radius of the concave arc is sufficiently larger than the radius of the convex arc defined by the corner cutting edge 6 or corner 2A, and is sufficiently smaller than the radius of curvature of a convexly curved line defined by the main cutting edge 7, as seen from the top, which will be described later. Further, the concave arc of the connecting portion 8B at the sub-cutting edge 8 smoothly touches a straight line extending perpendicularly to the longitudinal direction of the insert body 1, as described above, from the end 2B at the corner 2A. Accordingly, the connecting portion 8B is also concavely curved inward with respect to the tangential line M as shown in FIG. 1.

Further, in the second parallelogrammic surface of the insert body 1 which serves as the seat face 3, as indicated by the broken line in FIG. 1, the four side ridges including the side ridge 3A are formed in a shape of a straight line, and each corner is formed in a shape of a convex arc smoothly connected to the side ridges. Here, the radius of each acute end corner of the seat face 3 which is located at the backside (opposite side in the thickness direction of the insert body 1) of the corners having the corner cutting edges 6 of the rake face 2 is larger than the radius of each obtuse end corner of the seat face 3 which is located at the backside of each obtuse end corner 2A of the rake face 2. Incidentally, in the present embodiment, the angle delta at which the side ridge 3A of the second parallelogrammic surface defined by the seat face 3 is formed with respect to the extension line L as seen from the top is set to 5*, while the angle θ at which the tangential line M is formed with respect to the extension line L as seen from the top is set to 12*. Accordingly, the difference between the angles delta and [theta] is 7*

Moreover, as described above, the connecting portion 8B formed between the other end 8A of the sub-cutting edge 8 and the obtuse end corner 2A of the rake face 2 at the side ridge of the rake face 2, as seen from the side facing the relief face 4 connected to the sub-cutting edge 8, retreats toward the seat face 3 while drawing a convexly curved line from the one plane with the corner cutting edge 6 and the sub-cutting edge 8 toward the obtuse end corner 2A, and then extends on the other plane perpendicular to the center line C and positioned nearer to the seat face 3 than the one plane together with the obtuse end corner 2A. Further, the obtuse end corner 2A is also formed in a substantially 1/4 arc shape as seen from the top.

On the other hand, as seen from the top, the main cutting edge 7 is formed in a shape of a smoothly convexly curved surface which is projected to the outside of the insert body 1. As seen from the side facing the relief face 4 connected to the main cutting edge 7, the main cutting edge 7 is also formed in a shape of a convexly curved line which extends toward the seat face 3 while being smoothly convexly curved from the one end 7A of the main cutting edge 7 connected to the one end 6A of the corner cutting edge 6toward the other end 7B which is positioned at the obtuse end corner 2A, as shown in FIG. 2. In addition, the radius of curvature of a convexly curved line which is defined at a certain point of the main cutting edge 7 by the main cutting edge 7 as seen from the top is larger than the radius of curvature of a convexly curved line which is defined at this point by the main cutting edge 7 as seen from the side. That is, a convexly curved line at any portion of the main cutting edge 7 as seen from the top is made smoother than a convexly curved line thereof as seen from the side, and these radii of curvature are sufficiently larger than the radius of a convex arc which is defined by the corner cutting edge 6, as seen from the top, or the radius of the connecting portion 8B.

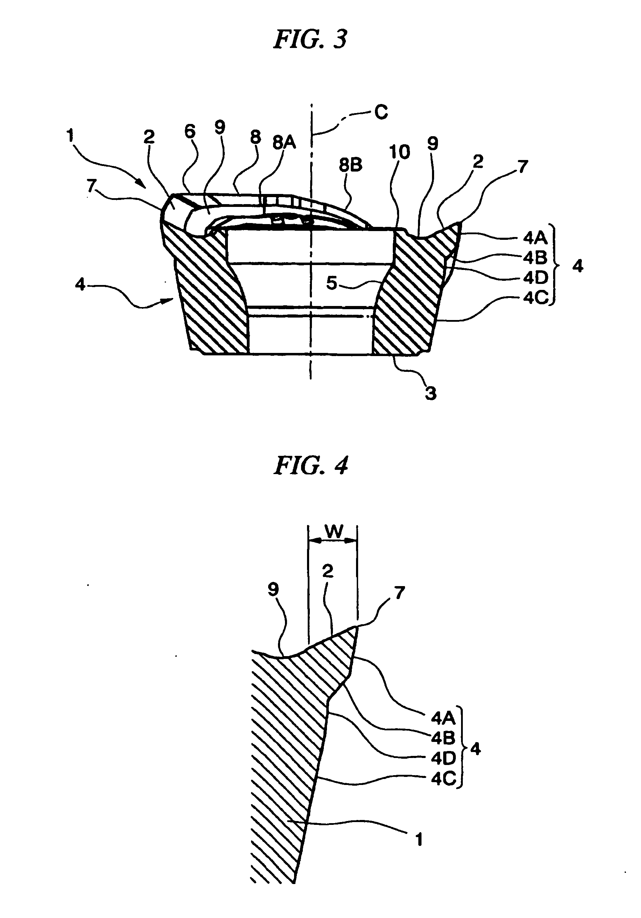

Moreover, the rake face 2 connected to the corner cutting edge 6, the main cutting edge 7 and the sub-cutting edge 8 are formed to have an inclined surface which is inclined to the seat face 3, as shown in FIGS. 3 and 4, away from the main cutting edge 7 as seen from the top. The inclination angle of the inclined surface of the rake face 2 with respect to the seat face 3 in a direction getting closer to the inside of the rake face 2 is approximately uniform. Accordingly, in a section which intersects the cutting edges (corner cutting edge 6, main cutting edge 7 and sub-cutting edge 8away from the main cutting edge, the inclined surface of the rake face 2 is formed in a shape of a substantially straight line which is inclined to the seat face 3. However, it is noted herein that the rake face 2 connected to the main cutting edge 7 is configured such that the inclination angle of the rake face with respect to the seat face 3 gradually decreases from the one end 7A of the main cutting edge 7 toward the other end 7B thereof and such that the absolute value of differential inclination angle along the main cutting edge 7 gradually decreases from the one end 7A of the main cutting edge 7 toward the other end 7B thereof, and then gradually increases from a middle portion of the main cutting edge. In addition, among the surfaces of the insert body 1, at least the rake face 2, preferably, the entire first parallelogrammic surface is subjected to lapping.

Further, a recessed face 9 having a concave arc section is formed further inside the outer periphery of the rake face 2 which is formed to have an inclined face in that manner. The recessed face 9 intersects a straight line defined by the inclined face as shown in FIG. 4 at an obtuse angle from the inclined face which has a section of a substantially straight line as described above, and is recessed toward the seat face 3 with respect to the inclined face. The recessed face 9 as seen from the top has a shape dimension which is approximately one round smaller than the peripheral shape, as seen from the top, of the first parallelogrammic surface of the insert body 1 having the rake face 2 formed thereon, and is formed around the inner periphery of the rake face 2. The recessed face 9 is also continuously formed while it undulates in the direction of the center line C in conformity with the unevenness of the cutting edges in the direction of the center line C and the undulation of the inclined surface of the rake face 2 such that the depth from an intersection with the rake face 2 in the above section is almost uniform.

A portion of such a recessed face 9 which extends along the main cutting edge 7 is formed so as to extend with almost the same spacing from the main cutting edge 7. Accordingly, the width W (width along the plane perpendicular to the center line C) of the inclined surface of the rake face 2 between the recessed face 9 and the main cutting edge 7 becomes almost uniform except for the vicinity of both ends 7A and 7B. Further, the width of the recessed face 9 which extends along the main cutting edge 7 is also almost uniform. In addition, the inclined surface of the rake face 2 connected to the main cutting edge 7 with the uniform width has preferably a narrow width of about 0.5 mm to 0.8 mm, and has a width of 0.6 mm in the present embodiment. To the contrary, the width of the inclined surface of the rake face 2 and the recessed face 9 inside the corner cutting edge 6 and the sub-cutting edge 8 continued therewith is larger than the inner portion of the main cutting edge 7. Moreover, the inside of the recessed face 9 protrudes in the direction of the center line C, and has a planar boss surface 10, which is perpendicular to the center line C. An opening of the mounting hole 5 on the first parallelogrammic surface is formed in the boss surface 10.

On the other hand, the side faces of the insert body 1 having the relief faces 4 formed therein are formed so as not to be inclined or be protruded to the outside of the insert body 1 from the cutting edges 6 to 8, the connecting portion 8B and the obtuse end corner 2A to the seat face 3 over the entire periphery of the insert body 1. In particular, the insert of the present embodiment becomes a positive insert in which the side surface gradually retreats to the inside of the insert body 1 from the portion connected to the rake face 2 toward the seat face 3. The portions of the side faces connected to the side ridge in which the corner cutting edge 6, the sub-cutting edge 8, the connecting portion 8B and the obtuse end corner 2A are formed are formed to be convexly and concavely curved in conformity with the shape of the side ridge which is convexly and concavely curved in the peripheral direction of the insert body 1 as described above as seen from the top. Moreover, the relief face 4 of the sides connected to the corner cutting edge 6 and the sub-cutting edge 8 is formed in a shape of a bent surface which has a smaller relief angle at the corner cutting edge 6 and the sub-cutting edge B and has a larger relief angle at the seat face 8. Also, in the present embodiment, as described above, the angle [theta] formed between the connecting portion 8B and the tangential line L is larger than the angle delta formed between the side ridge 3A of the seat face 3 on the opposite side to the rake face and the tangential line L. As a result, the relief angle of the side portion connected to the connecting portion 8B gradually increases from the obtuse end corner 2A toward the other end 8A of the sub-cutting edge 8. Accordingly, the relief angle of the side portion from the corner cutting edge 6 to the obtuse end corner 2A becomes maximum at the portion of the relief face 4 connected to the corner cutting edge 6 and the sub-cutting edge 8.

On the contrary, from the one end 7A to the other end 78, the relief face 4connected to the main cutting edge 7 has a first relief face 4A which is connected to the main cutting edge 7 and which is inclined so as to be gradually retreated to the inside of the insert body toward the seat face 3, and a second relief face 4B which is connected to the first relief face 4A on the seat face 3 side and which is inclined so as to gradually retreated at an inclination angle larger than the first relief face 4A. The relief face 4 connected to the main cutting edge 7 has a stepped portion which protrudes toward the outer peripheral side with respect to the seat face 3, as shown in FIG. 3 and FIG. 4, by these first and second relief faces 4A and 4B. It is noted herein that the first and second relief faces 4A and 4B in the direction along the main cutting edge 7 are formed in a shape of a convexly curved surface which smoothly protrudes toward the outside of the insert body 1 in conformity with the smoothly convexly curved line defined by the main cutting edge 7 as seen from the top. Each inclination angle of the first and second relief faces gradually increases from the one end 7A of the main cutting edge 7 toward the other end 7B thereof, that is, the portions of the first and second relief faces on the other end 7B side retreat toward the inside of the insert body 1 at an angle larger than those on the one end 7A side.

Further, the first and second relief faces 4A and 4B gradually retreat toward the inside of the insert body 1 at a uniform angle, respectively, away from the main cutting edge 7. Accordingly, the first and second relief faces is formed in a shape of a straight line as shown in FIG. 3 and FIG. 4 in a section orthogonal to the main cutting edge 7. Moreover, the width of the first and second relief faces 4A and 4B (the width thereof in the direction of the center line C) are almost uniform from the one end 7A of the main cutting edge 7 to the other end 7B. Accordingly, the first and second relief faces 4A and 4B extend so as to gradually extends toward the seat face 3 while being convexly curved from the first end 7A of the main cutting edge toward the other end 7B of the main cutting edge, as shown in FIG. 2 in plan view as seen from the side, similarly to the main cutting edge 7.

Moreover, the portion of the relief face 4, on the seat face 3 side is formed in a shape of an inclined flat face which gradually retreats at a smaller uniform inclination angle (an inclination angle almost equal to that of the first relief face 4A) than the second relief face 4B toward the seat face 3, that is, a flat face which extends straight in a direction along the main cutting edge 7, thereby serving as a constraint face 4C when an insert is mounted to the tool body which will be described later. It is noted herein that an edge of the constraint face 4C on the main cutting edge 7 side extends perpendicularly to the center line C from the one end 7A of the main cutting edge 7 toward the other end 7B of the main cutting edge 7 (extends parallel to the seat face 3) as shown in FIG. 2 as seen from the side, and intersect an edge of the second convexly curved relief face 4B on the seat face 3 side which gradually inclines to the seat face 3 from the one end 7A to the other end 7B as seen from the side as described above, in the middle of getting closer to the other end 7B.

Accordingly, a gap is formed between the edge of the second relief face 4B at the seat face 3 and the edge of the constraint face 4C on the main cutting edge 7 side and the width of the gap gradually increases toward the one end 7A as seen from the side. Also, the gap is formed in a shape of a flat face perpendicular to the seat face, thereby calling a third relief face 4D in the present embodiment. The constraint face 4C intersects the third relief face 4D at the edge thereof on the main cutting edge 7 side at an obtuse angle. Since the above edge extends perpendicularly to the center line C as described above in the present embodiment, the constraint face 4C and the third relief face 4D extends parallel to each other from the one end 7A of the main cutting edge 7 toward the other end 7B of the main cutting edge 7.

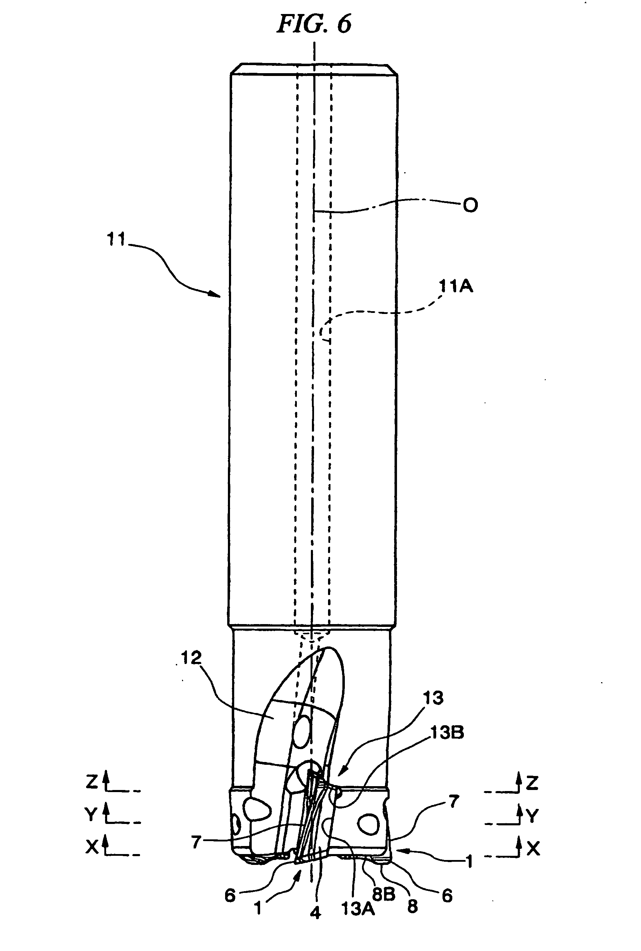

As shown in FIG. 5 to FIG. 7, the insert of the present embodiment constructed as above is releasably mounted to the tool body 11 to constitute a rotary cutting tool of the present embodiment. The tool body 11 is made of a steel material, etc., and is formed in a substantially columnar shape about an axis 0. A rear end (an upper portion in FIG. 5 and FIG. 6) of the tool body 11 is gripped by a spindle, etc. of a machine tool and is rotated in the rotating direction T of the tool about the axis O to be used for cutting. It is noted herein that the periphery at a distal end of the tool body 11 is formed with insert pockets 12 which are opened at a distal face of the tool body and extends toward the rear end. Moreover, an end wall face of each of the insert pockets 12_, which faces forward in the rotating direction T, is formed with an insert mounting seat 13. The insert body 1 of the insert of the above-described embodiment is mounted to this insert mounting seat 13. In addition, the insert pocket 12, as shown in FIG. 6, is formed to extend rearward in the rotating direction T while being convexly curved forward in the rotating direction T, toward the rear end of the tool body 11.

The insert mounting seat 13, which is recessed from the wall face of the insert pocket 12, comprises a mounting seat bottom face 13A which has almost the same planar shape and size as that of the seat face 3 and which is inclined rearward in the rotating direction T toward the rear end of the tool body 11, an insert mounting seat wall face 13B which rises from a portion of the mounting seat bottom face 13A on the rear end side of the tool body 11 and which faces the distal end of the tool body 11 so as to be connected to the wall face of the insert pocket 12, and a mounting seat wall face 13C which rises from a portion of the mounting seat bottom face 13A at the inner peripheral side of the tool and which faces the outer peripheral side of the tool. Further, the center of the mounting seat bottom face 13A is formed with a screw hole (not shown) for a clamping screw 14, which is inserted through the mounting hole 5 of the insert body 1, screwed thereinto. Also, the shape of the mounting seat wall faces 13B and 13C and the inclination angle thereof with respect to the mounting seat bottom face 13A are respectively adjusted depending on the shape of the relief face 4 connected to the sub-cutting edge 8 of the insert body 1 and the inclination angle of the relief face 4 with respect to the seat face 3, and the shape of the constraint face 4C of the relief face 4 connected to the main cutting edge 7 and the inclination angle of the constraint face 4C with respect to the seat face 3.

The insert body 1 is mounted to the insert mounting seat 13 by seating the seat face 3 on the mounting seat bottom face 13A with the first parallelogrammic surface having the rake face 2 formed therein facing forward in the rotating direction T of the tool, by abutting the relief face 4 on one sub-cutting edge 8 side against the mounting seat wall face 13B, and abutting the constraint face 4C on one main cutting edge 7 side against the mounting seat bottom face 13C, thereby constraining the rotation of the insert about the central axis C, and then by fixing the insert with a clamping screw 14. In addition, a corner where the mounting seat wall faces 13B and 13c intersect each other is formed with a recess for preventing the interference with the one corner cutting edge 6 where the one main cutting edge 7 and the sub-cutting edge 8 intersects each other and the relief face 4 connected thereto.

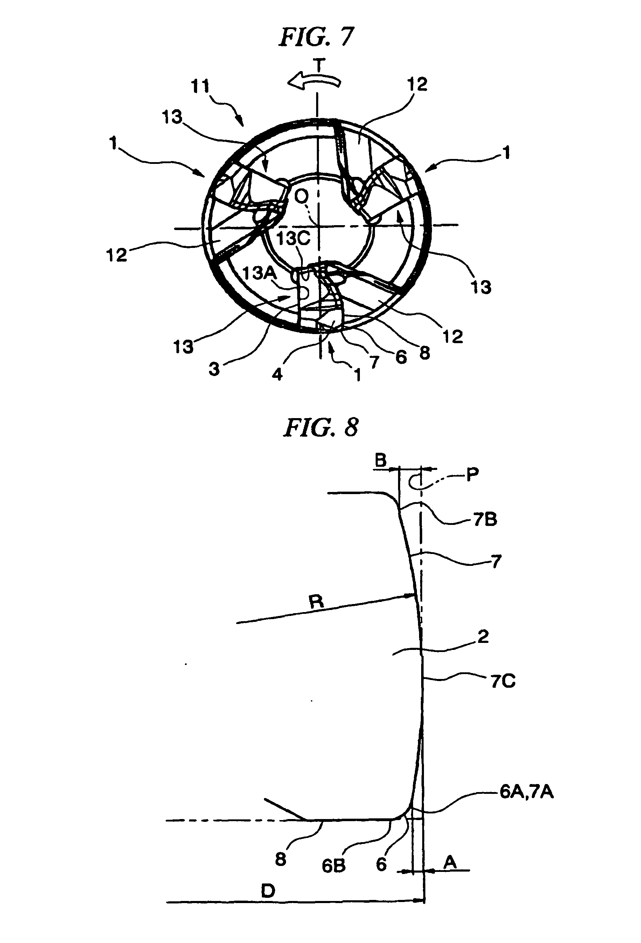

Accordingly, in the insert body 1 mounted in this manner, a corner cutting edge 6 opposite to the one corner cutting edge 6 is positioned at the outer peripheral side of the distal end of the tool body 11, and the main cutting edge 7 whose one end 7A coincides with the one end 6A of the corner cutting edge 6 is mounted to extend rearward in the rotating direction T toward the rear end at the outer periphery of the distal end of the tool body 11. Further, the sub-cutting edge 8 connected to the other end 6B of the corner cutting edge 6 is disposed to be positioned on a plane perpendicular to the axis O of the tool body 11, and the connecting portion 8B connected to the other end 8A of the sub-cutting edge 8 retreats with respect to the plane. Also, in a state in which the insert of the present embodiment is mounted to such a tool body 11, the main cutting edge 7 extending at the outer periphery of the distal end of the tool body 11 is formed in a convex arcuate shape such that a projection line obtained by projecting a rotation locus about the axis O of the tool body on a plane including the axis O as shown in FIG. 8 smoothly contacts a cylindrical surface P about the axis O at a middle portion 7C between the one end 7A of the main cutting edge and the other end 7B of the main cutting edge, and retreats to the inside of the cylindrical surface P toward both ends of the main cutting edge, i.e., the one end 7A and other end 7B of the main cutting edge.

Specifically, the insert of the above embodiment is mounted to the insert body 1, as described above, in a state in which the main cutting edge 7 formed in a shape of a convexly curved line which protrudes outward as seen from the top of the insert body 1 is disposed to extend rearward in the rotating direction T toward the rear end of the tool body 11. Further, as shown in FIG. 8, the main cutting edge 7 is formed in a convex arcuate shape which contacts the straight line parallel to the axis O on the cylindrical surface P at the middle portion 7C from the inside of the cylindrical surface P, without being included in the cylindrical surface P about the axis O, that is, without causing the projection line of the main cutting edge to coincide with the straight line , unlike the cutting edge in Japanese Unexamined Patent Application Publication No. 2-298414 and the curved cutting edge in Japanese Unexamined Patent Application Publication No. 2003-334716. In addition, the radius R of a convex arc defined by the projection line of the main cutting edge 7 becomes sufficiently large, and the amount by which both ends of the projection line 7 of the main cutting edge 7 which defines the convex arc retreats inward from the cylindrical surface P is set such that a retreat amount A of the one end 7A of the main cutting edge 7 is smaller than a retreat amount B of the other end 7B of the main cutting edge 7. For example, in the present embodiment in which the width W of the rake face 2 connected to the main cutting edge 7 is set to 0.6 mm as described above, the retreat amount B is about 0.02 mm, whereas the retreat amount A is about 0.01 mm which is about half of the retreat amount A.

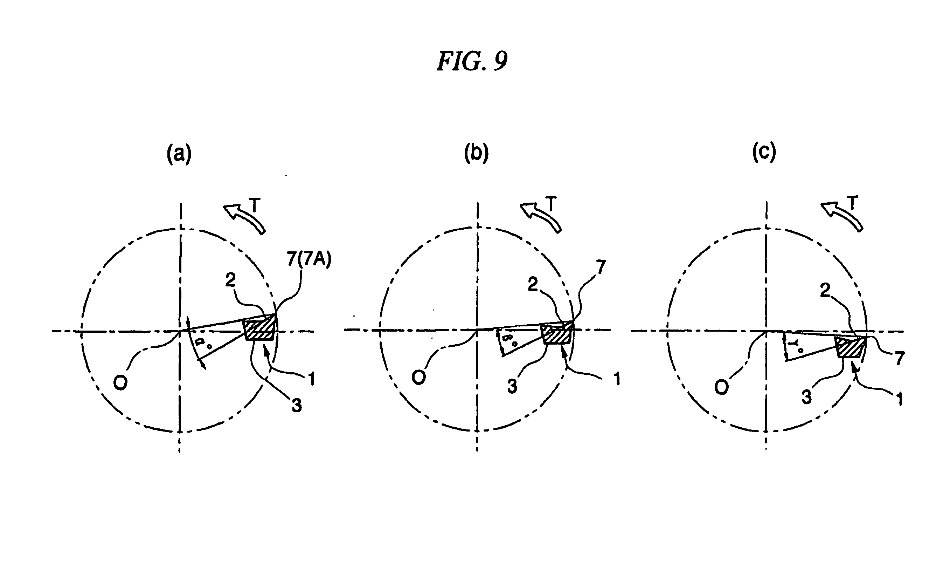

Moreover, in the insert of the present embodiment, the inclination angle of the rake face 2 connected to the main cutting edge 7 with respect to the seat face 3 gradually decreases from the one end 7A of the main cutting edge 7 toward the other end 7B of the main cutting edge 7, as described above. However, the absolute value of the differential inclination angle along the main cutting edge 7 gradually decreases from the one end 7A to the middle of the main cutting edge, and then gradually increases toward the other cutting edge 7B. In this manner, the seat face 3 of the insert body 1 is seated on and mounted to the mounting seat bottom face 13A of the insert mounting seat 13 which is inclined rearward in the rotating direction T toward the rear end of the tool body 11. Thus, in this mounted state, the rake angle defined by the rake face 2 gradually decreases and then increases from the one end 7A toward the other end 7B. Specifically, as shown in the cross-sectional view of FIG. 9, rake angles alpha , beta and gamma of the rake face 2 at the one end 7A of the main cutting edge 7, at the middle between both ends 7A and 7B thereof, and at the other end 7B thereof satisfy the following relationship: a > beta < gamma . Here, since the outer diameters of the main cutting edge 7 at its one end 7A and other end 7B are respectively smaller than the outer diameter D of the main cutting edge at its middle portion 7C by twice the retreat amounts A and B because the projection line of the main cutting edge 7 is formed in shape of a convex arc as described above.

In addition, in the rotary cutting tool of the present invention, the distal end of the tool body 11 is formed with a plurality of (three in the drawings) insert pockets 12 and insert mounting seats 13 which is arranged at equal intervals in the circumferential direction with a rotational symmetry about the axis O. The insert body 1 is mounted to each of the insert mounting seats 13 such that the rotation loci of the cutting edges (the corner cutting edge 6, the main cutting edge 7 and the sub-cutting edge 8) thereof coincide with each other. Further, the tool body 11 is formed with a coolant supply hole 11A along the axis O from the rear end. This coolant supply hole 11A is branched at the distal end of the tool body 11 and is opened to the inner wall face of each of the insert pockets 12 so as to face the rake face 2 of the insert body 1. The surface of the distal end of the tool body 11 including at least the inner wall face of the insert pocket 12 has a surface roughness of less than Ry 3.2 mu m by a turning process, grinding and lapping, and is subjected to nickel plating, or lubricative coating using DLC, WC/C, MoS2, CrN, TiN, Al2O3, and the like. Further, the dimension of the outer diameter D of the cutting edge measured based on a master insert may be indicated on the outer peripheral surface or the distal end face of the tool body 11 by marking such as laser marking or punching.

In the insert and rotary cutting tool constructed as above, the main cutting edge 7 is formed in a shape of a convex arc which retreats inward from the cylindrical surface P as the projection line of the rotation locus about the axis O approaches both ends 7A and 7B, without being included on the cylindrical surface P about the axis O of the tool body 11 unlike the cutting edge in Japanese Unexamined Patent Application Publication No. 2-298414 and the curved cutting edge in Japanese Unexamined Patent Application Publication No. 2003-334716. Thus, for example, even when the insert body 1 is mounted to the tool body 11 such that the main cutting edge 7 is inclined from a predetermined position as seen from the top, the projection line, i.e., the rotation locus of the main cutting edge 7 itself does not experience a great change as long as the main cutting edge 7 extends in the direction along the convex arc defined by the projection line. Accordingly, a desired vertically machined surface can be formed. In particular, when the insert is fixed to the tool body 11 by screwing the clamping screw 14 through the mounting hole 5 provided to pass though the insert body 1 in the direction of its thickness, the insert is apt to be mounted in a state inclined with respect to the center line C of the mounting hole 5 irrespective of the abutment of the mounting seat wall faces 13B and 13C. However, since the main cutting edge extends substantially in the direction along the convex arc defined by the projection line, it is possible to prevent the precision of a vertically machined surface from being remarkably deteriorated.

Moreover, in the case of forming a vertically machined surface having a depth larger than the effective cutting edge length of the main cutting edge 7, as described above, the tool body 11 is moved step by step toward the distal end in the direction of the axis O thereof to perform cutting so as to sequentially dig down the vertically machined surface. In this case, a vertically machined surface formed by the insert and rotary cutting tool of the above construction, has a shape obtained by shifting and transferring a convex arc defined by the projection line of the main cutting edge 7 in the direction of the axis O. Accordingly, a joint Q between vertically machined surfaces at respective stages has a shape which is formed by overlapping a portion formed by the one end 7A of the main cutting edge 7 at the time of the previous cutting and which retreats inward from the cylindrical surface P, and a portion formed by the other end of the main cutting edge 7 during cutting which is performed in a state in which the tool body 11 is moved to the next stage and which similarly retreats inward from the cylindrical surface P. That is, the joint has a section of a chevron that has concave arcs as both inclined faces thereof as shown in FIG. 10. However, as described above, the radius R of an arc defined by the projection line of the main cutting edge 7 is set to be sufficiently large, thereby making the inclination of the chevron-shaped inclined faces defined by the section extremely smooth. As a result, the height of the chevron can be suppressed to approximate the flat faces extending along the cylindrical surface P to a sectional shape that the flat faces are continuously connected to each other.

For this reason, according to the above insert and rotary cutting tool, even when a deeply and vertically machined surface is formed step by step in that manner, it is possible to prevent a problems that the joint Q between the vertically machined surfaces at the respective stages becomes so large that stripes may be formed in the feed direction of the tool body 11, and it is possible to form a vertically machined surface having high surface quality with no conspicuous joint Q. Moreover, in the case of moving the tool body 11 step by step in that manner, even if the cylindrical surfaces P deviate from each other during cutting at respective stages and do not coincide with each other because of the occurrence of bending in the tool body 11 caused by load, etc. during cutting, the joint Q still has the shape that the convex arcs in section overlap each other as described above. Thus, the height of the chevron and the inclination of the inclined face are not remarkably increased. Accordingly, even if bending occurs in the tool body 11 in that way, the joint Q is prevented from being conspicuous. As a result, it is possible to form a vertically machined surface with high surface quality and high precision.

Furthermore, in the insert and rotary cutting tool of the present embodiment, the distance A by which the one end 7A, which is disposed at the distal end of the outer periphery of the tool body 11 retreats from the cylindrical surface P, is set to be smaller than the distance B by which the other end 7B disposed toward the rear end of the outer periphery of the tool body 11 retreats from the cylindrical surface P. In the case of forming a bottom face orthogonal to the vertically machined surface, as shown in FIG. 10, at the bottom (at the distal end of the tool body 11) of the vertically machined surface which has been cut as described above, using the sub-cutting edge 8 connected to the main cutting edge 7 via the corner cutting edge 6, if the corner cutting edge 6 and the one end 7A of the main cutting edge 7 connected to the sub-cutting edge 8 retreats inward from the cylindrical surface P as described above, it is not possible to prevent a corner, where the vertically machined surface and the bottom face intersects each other from being inclined inward from the cylindrical surface P. However, since the retreat amount A of the main cutting edge 7 at the one end 7A becomes small as described above, it is possible to suppress the retreat amount near the corner inward from the cylindrical surface P, thereby approximating the vertically machined surface and the bottom face to a state in which they intersect each other at right angle. For this reason, according to the present embodiment, even if a bottom face is formed at the bottom of the vertically machined surface in this manner, it is possible to obtain a machined surface with higher quality.

On the other hand, as seen from the side facing the relief face 4, the main cutting edge 7 of the insert is formed in shape of a convexly curved line which extends toward the seat face 3 while being convexly curved from the one end 7A of the main cutting edge 7 toward the other end 7B thereof. The mounting seat bottom face 13A of the insert mounting seat 13 having the seat face 3 seated thereon is inclined as described above. As a result, such a main cutting edge 7 is mounted so as to incline rearward in the rotating direction T of the tool body 11 toward the rear end of the tool body 11. For this reason, at the time of deep cutting which utilizes almost the entire effective cutting edge length, the axial rake angle is can be increased at the other end 7B of the main cutting edge 7 at the rear end of the tool. Thus, even if wide chips are produced at the time of such deep cutting, it is possible to dispose the chips by rapidly separating them from the rake face 2.

Also, as the main cutting edge 7 is formed in a shape of a convexly curved line as seen from the side, the rake face 2 connected to the main cutting edge 7 is also formed in a shape of a convexly curved face which is convexly curved forward in the rotating direction T, similarly. In contrast, in the insert and rotary cutting tool of the above construction, not only the main cutting edge 7 is formed in shape of a convexly curved line as seen from the top, but also the projection line of the main cutting edge is formed in a shape of an arc which defines a convexly curved line. Thus, chips produced by such a main cutting edge 7 has a recessed sectional shape which is largely curved such that the middle portion 7C is recessed with respect to both ends 7A and 7B of the main cutting edge 7. Specifically, according to the insert and rotary cutting tool, the most recessed portions of chips which are largely bent in a recessed shape flow out onto the rake face 2 along the most protruding portion of the convex rake face 2. Thus, chips can be more easily separately from the rake face 2. Accordingly, as described above, with the larger axial rake angle at the other end 7B, chip clogging and biting can be surely prevented from occurring even during deep cutting or high-speed cutting. As a result, it is possible to further improve the cutting efficiency.

Moreover, the rake face 2 connected to the main cutting edge 7 is formed in shape of an inclined face which is inclined not only to the inside thereof but also to the seat face 3. As a result, the radial rake angle of the rake face 2 can be set to be a positive angle. Thus, even during the above-mentioned deep cutting or high-speed cutting, it is possible to reduce the cutting resistance, and it is possible to prevent the tool body 11 from being bent or chattered due to such cutting resistance. Furthermore, since the width W of the rake face 2 is set to a small width as described above in the present embodiment, it is possible to further reduce the cutting resistance. Further, the inclination angle at which the rake face 2 formed in a shape of an inclined face is defined toward the inside thereof gradually decreases from the one end 7A of the main cutting edge 7 toward the other end 7B of the main cutting edge for the seat face 3. Accordingly, the rake angle (radial rake angle) is prevented from being remarkably different at the one end 7A of the main cutting edge 7 at the distal end of the tool and the other end 7B thereof at the rear end of the tool. Thus, it is possible to promote smooth cutting by virtue of stable creation of chips.

On the other hand, in a state in which the insert body 1 is attached to the tool body 11, the inclination angle of the rake face 2 varies from one end 7A toward the other end 7B, as shown in FIG. 9. That is, the inclination angle gradually decreases from the rake angle alpha to the rake angle beta , and then gradually increases from the rake angle beta to the rake angle gamma at the other end 7B. Accordingly, while stably creating chips as described above, inside the rake face 2, the rake face 2 which is convexly curved as described above can be made largely protruded at a portion inside thereof between both ends 7A and 7B of the main cutting edge 7 than a portion thereof inside both ends 7A and 7B of the main cutting edge 7. For this reason, chips which are produced in a recessed shape by the main cutting edge 7 whose projection line is formed in a shape of a convex arc flow on the rake face 2 which is more largely convexly curved inward. Thus, it is possible to further improve chip separation. Even when a metallic material, such as aluminum, having high ductility is cut at high speed, it is possible to obtain an excellent chip disposal property. In addition, if the position where the rake angle becomes the smallest coincides with the middle portion 7C where the main cutting edge 7 contacts the cylindrical surface P of the projection line, it is more effective to dispose chips.

In addition to the above, in the present embodiment, the recessed face 9 with a sectional shape of a concave arc which is recessed from the inclined face defined by the rake face 2 toward the seat face 3 is formed over the entire periphery of the rake face 2 further inside the rake face 2. The recessed face 9 is formed to extend along the main cutting edge 7 with an almost equal spacing from the main cutting edge 7 as seen from the top inside the main cutting edge 7. Accordingly, as shown in FIG. 11, a chip S which has flown out of the rake face 2 is forcefully separated from the rake face 2 when it reaches the recessed face 9. Thus, it is possible to improve more reliable chip separation. In particular, in the present embodiment, such recessed face 9 is formed over the entire periphery of the first parallelogrammic surface inside the rake face 2. Accordingly, it is also possible to promote excellent chip separation for chips produced by the corner cutting edge 6 and the sub-cutting edge 8.

On the other hand, in the present embodiment, the relief face 4 connected to the main cutting edge 7 is formed with the first relief face 4A which is connected to the main cutting edge 7 and which is inclined to gradually retreat at a small inclination angle as it approaches the seat face 3, and the second relief face 4B which is connected to a portion of the first relief face 4A at the seat face 3 and which is inclined to gradually retreat at a larger inclination angle than the first relief face 4A. Accordingly, it is possible to secure a cutting edge point angle at an edge point of the main cutting edge 7 by the first relief face 4A which has a smaller rake angle as its inclination become small. In particular, as in the present embodiment, when the rake face 2 is formed in a shape of an inclined face which is inclined to the seat face 3 as it approaches the inside thereof, the cutting edge point can be prevented from chipping. In contrast, it is possible to secure a sufficient relief distance at the side away from the cutting edge point by the second relief face 4B which is largely inclined. Thus, the cutting resistance can be prevented from increasing due to twice colliding with the vertically machined surface. Moreover, these first and second relief faces 4A and 4B is formed to extends toward the seat face 3 while being convexly curved as it approaches the other end 7B of the main cutting edge 7 from the one end 7A of the main cutting edge 7 as seen from the side, similarly to the main cutting edge 7. As shown in FIG. 2, the widths of the first and second relief faces 4A and 4B from the main cutting edge 7 can be made uniform over the entire length of the main cutting edge 7. For example, it is possible to prevent a situation that the first relief face 4A is partially widened to cause the above-mentioned twice colliding, or the first relief face 4A is partially narrowed to easily cause chipping.

Further, when such insert body 1 is made of cemented carbide, etc. as described above, the relief face 4 is formed by forming an inner peripheral surface of a cavity formed at a die of a pressing die into a shape conformed to the relief face 4, and by sintering a powder compact obtained by compressing a source powder such as cemented carbide which is filled into the cavity. In this case, as in the present embodiment, when the relief face 4 has the first and second relief faces 4A and 4B, and the stepped portion is formed on a portion of the relief face 4 on the main cutting edge 7 so as to protrude toward the outer peripheral side, at the time of compression of the source powder, the source powder is more densely compressed between a portion of the inner peripheral surface of the cavity which forms the stepped portion and corresponds to the second relief face 4B and a punch surface of an upper punch corresponding to the rake face 2. Accordingly, deformation due to sintering is suppressed at the stepped portion around the main cutting edge 7 which is densely compressed in that manner, which makes it possible to obtain an insert body 1 which has a desired dimension and shape of the main cutting edge 7. Thus, according to the present embodiment, in particular, it is possible to provide an insert whose main cutting edge 7 has high precision, and it is possible to more reliably exhibit the above-mentioned effects by virtue of the main cutting edge 7.

Moreover, in the present embodiment, the third relief face 4D which is connected to the second relief face 4B inclined at a large inclination angle (relief angle) and which extends perpendicularly to the seat face 3 is formed at the seat face 3 of the first and second relief faces 4A and 4B, which is formed into a stepped portion at the one end 7A of the main cutting edge 7. Also, the constraint face 4C is formed between the third relief face 4D and the seat face 3 to be inclined so as to retreat toward the inside of the insert body 1 as it approaches the seat face 3. Thus, for example, compared to the case in which the constraint face 4C is directly connected to the second relief face 4B like the other end 7B of the main cutting edge 7, it is possible to secure a large thickness of the insert body 1 right below the stepped portion which is formed by the first and second relief faces 4A and 4B. However, in a state in which the insert body 1 is mounted to the tool body 11, the surroundings of the one end 7A of the main cutting edge 7 and the corner cutting edge 6 connected thereto are positioned forward in the rotating direction T of the tool to bite into a workpiece for the first time. For this reason, during this biting, an impact load may be applied, which tends to cause chipping or breaking. However, according to the present embodiment, the thickness of the insert body 1 is secured at such a portion, so that it is possible to obtain strength enough to resist such an impact load. As a result, it is possible to extend the lifetime of an insert. In addition, the relief face 4 is formed to have an inclined face in which the first and second relief faces 4A and 4B and the constraint face 4C retreat toward the inside of the insert body 1 toward the seat face 3, and the third relief face 4D is formed perpendicularly to the seat face 3. Thus, as described above, the entire periphery of the insert body 1 is formed into a shape which is not inclined or protruded toward the outside of the insert body I between the cutting edges 6 to 8 to the seat face 3, that is, a profile which does not have a so-called undercut portion. Thus, even when a powder compact is press-formed to manufacture an insert by the pressing die, it is advantageous in performing press-forming by a reliable and relatively simple metal die.

Furthermore, in the insert of the present embodiment, the sub-cutting edge 8 is formed at the side ridge of the rake face 2 connected to the other end 6B of the corner cutting edge 6, and the sub-cutting edge 8 is positioned on the plane perpendicular to the axis O when the insert is mounted on the tool body 11. Thus, it is possible to more reliably approximate the vertically machined surface formed in the workpiece and the bottom face of the insert to a state in which they intersect each other at right angle. Also, the connecting portion 8B which is recessed inward with respect to the extension line L of the sub-cutting edge 8 is formed at the other end 8A of the sub-cutting edge 8 which is located at the inner periphery of the tool body 11. Accordingly, the connecting portion 8B is also recessed so as to retreat from the plane perpendicular to the axis O. Thus, even in the case of performing a ramping process in which a groove or recess having an inclined bottom face is formed in a workpiece by feeding the tool body 11 toward the distal end obliquely toward the axis O, it is possible to prevent the inner peripheral portion of the tool body 11 rather than the other end 8A from interfering with the bottom face formed by the sub-cutting edge 8.

Furthermore, in the insert of the present embodiment, in plan view as seen from the side facing the rake face 2 in the direction of the center line C of the insert body 1, the angle [theta] formed between a tangential line M which touches the connecting portion 8B and the extension line L is set to be larger than in a range of 5 DEG to 20 DEG than an angle delta formed between the side ridge 3A of the seat face 3 located on the opposite side to the side ridge having the connecting portion 8B formed therein, and the tangential line L. Thus, even if the inclined angle of the bottom face becomes large during the ramping process, the connecting portion 8B or the side portion of the insert body 1 connected to the connecting portion8B can be more reliably prevented from interfering with the bottom face. As a result, it is possible to perform a cutting process with a high degree of freedom on a workpiece. In other words, there is a fear that, if the difference between the angles [theta] and delta is below 5*, the retreat amount of the connecting portion 8B with respect to the extension line L of the sub-cutting edge 8 is insufficient, while if the difference between the angles [theta] and delta exceeds 20*, the relief angle of the side, particularly, the obtuse end corner 2A of the insert body 1 connected to the connecting portion 8B is not sufficient. In each case, there is a fear that, when the feed amount of the tool body 11 in the direction of the axis O to the feed amount of the tool body 11 in the direction orthogonal to the direction of the axis O during the ramping process is made large, that is, when the inclined angle of the bottom face is made large, the insert body 1 may interfere with the formed bottom face to damage the bottom face, or an increase in resistance or damage to the insert body 1 may be caused.

Still further, in the present embodiment, the angle [theta] of the tangential line M of the connecting portion 8B formed with respect to the extension line L of the sub-cutting edge 8 is made larger than the angle delta of the side ridge 3A of the seat face 3 with respect to the tangential line M. Thereby, the relief angle of the side of the insert body 1 having the sub-cutting edge 8 or connecting portion 8B formed therein, as described above, gradually increases from the obtuse end corner 2A toward the other end 8A of the sub-cutting edge 8 along the connecting portion 8B and then becomes maximum at the relief face 4 connected to the sub-cutting edge 8. Thus, even when the inclination angle is made large during the ramping process, the relief face 4 connected to the sub-cutting edge 8 can also be prevented from interfering with the bottom face. Additionally, in the present embodiment, since the connecting portion 8B is recessed to define a concave arc as seen from the top, it is possible to secure the strength of the insert body 1 at the other end 8A connected to the sub-cutting edge 8, and it is advantageous in that chipping in the portion can also be prevented.

In addition, in the present invention, the insert body 1 is formed in a shape of a flat plate shape which defines a substantially parallelogrammic surface as seen from the top. However, the insert body may is formed in other shapes as long as a surface having the rake face formed therein is a polygonal surface which has at least a corner formed with a corner cutting edge and a ridge connected to the corner and formed with a main cutting edge. Further, even if the first and second relief faces 4A and 4B are formed to retreat toward the inside of the insert body 1 toward the seat face 3, they may be formed into a convexly curved surface which retreats toward the seat face 3 while being convexly curved toward the outside of the insert body 1 in a cross-section orthogonal to the main cutting edge 7. Moreover, in the rotary cutting tool of the present embodiment, the insert pocket 12 which is formed at the outer periphery of the distal end of the tool body 11 is curved rearward in the rotating direction T toward the rear end of the tool body 11 while being convexly curved in the rotating direction T, similarly to the profile of the main cutting edge 7 of the insert in its mounted state. Thus, it is possible to discharge well separable chips produced by the main cutting edge 7 more effectively and rapidly toward the rear end of the tool body 11. Also, even when a vertically machined surface having a width of more than an effective cutting edge length is cut, or when grooving is performed using the rotary cutting tool, it is possible to prevent the occurrence of biting due to stay of chips.

## Claims

1. A throwaway insert having an insert body (1) which defines a substantially polygonal flat plate shape, as seen from the top, the throwaway insert including:
a rake face (2) which is formed on a first polygonal surface of the insert body (1),
a corner cutting edge (6) which is formed at a corner of the rake face (2) and has a substantial arcuate shape, as seen from the top, facing the first polygonal surface of the insert body (1),
a main cutting edge (7) which is formed at a side ridge of the rake face (2) connected to one end (6A) of the corner cutting edge (6), and
a relief face (4) which is constituted by a side face of the insert body (1),
the throwaway insert being mounted to a tool body (11) which is to be rotated about an axis (0) such that the rake face (2) faces forward in a rotating direction of a tool, the corner cutting edge (6) is positioned at an outer periphery of a distal end of the tool body (11), and the main cutting edge (7) extends rearward in the rotating direction of the tool body (11) as the main cutting edge (7) approaches the rear end of the tool body (11) at the outer periphery of the tool body (11),
wherein the rake face (2) connected to the main cutting edge (7) comprises an inclined face which is inclined inward toward the second polygonal surface of the insert body (1) serving as a seat face (3) to seat on the tool body (11),
wherein, in cross-section, an inclination angle of the rake face (2) with respect to the seat face (3) gradually decreases from one end (7A) of the main cutting edge (7) connected to the one end (6A) of the corner cutting edge (6) toward the other end (78) thereof, and a rake angle (α, β, γ) which is formed in cross-section by the rake face (2) and the radius between the axis (0) and the main cutting edge (7), with the insert mounted to the tool body (11), gradually decreases and then gradually increases from one end (7A) of the main cutting edge (7) toward the other end (7B) thereof,
wherein the main cutting edge (7) is formed in a shape of a convexly curved line which protrudes toward the outside of the rake face (2), as seen from the top, and a shape of another convexly curved line which extends toward the seat face (3) while being convexly curved from the one end (7A) of the main cutting edge to the other end (7B) thereof as seen from the side facing the relief face (4), and
wherein, with the insert mounted to the tool body (11), a projection line of a rotation locus of the main cutting edge (7) about the axis (0) forms a shape of a convex arc which smoothly comes, at a middle portion (7C) of the main cutting edge (7), into contact with a cylindrical surface (P) having its center line corresponding to the axis (0) and which gradually retreats inward from the cylindrical surface (P) as it approaches both ends of the main cutting edge (7).

2. The throwaway insert according to claim 1, wherein, with regard to retreat amounts by which the both ends of the projection line of the main cutting edge (7) retreat from the cylindrical surface, the one end of the main cutting edge (7) has a smaller retreat amount than the other end of the main cutting edge (7) which is positioned at the outer periphery of the rear end of the tool body (11).

3. The throwaway insert according to claims 1 or 2, wherein a recessed face (9), which is recessed from the inclined face of the rake face (2) toward the seat face (3) and has a concave cross-sectional shape, is formed inward of the rake face (2), and extends around an entire inner periphery of the rake face (2) in a state in which it is separated by substantially the same interval from the main cutting edge as seen from the top.

4. The throwaway insert according to any one of claims 1 to 3, wherein the relief face (4) connected to the main cutting edge (7) comprises a first relief face (4A) which is connected to the main cutting edge (7) and is inclined to gradually retreat toward the seat face (3), and a second relief face (4B) which is connected to the first relief face (4A) on the seat face (3) side and is inclined to gradually retreat at a larger inclination angle than the first relief face (4A), and the first and second relief faces are formed such that they extend toward the seat face (3) while being convexly curved from the one end (7A) of the main cutting edge (7) toward the other end (7B) thereof as seen from the side.

5. The throwaway insert according to claim 4, wherein at least the one end of the main cutting edge (7) is formed with a planar third relief face (4D) which is connected to the second relief face (4B) on the seat face (3) side and extends perpendicularly to the seat face (3).

6. The throwaway insert according to any one of claims 1 to 5, wherein the insert body (1) defines a substantially parallelogrammic flat shape as seen from the top, wherein a side ridge of the rake face (2) connected to the other end (6B) of the corner cutting edge (6) is formed with a sub-cutting edge (8) extending from the other end (6B) of the corner cutting edge (6) toward the inner periphery of the tool body (11) with the insert mounted to the tool body (11), and a connecting portion (8B) which is connected to the sub-cutting edge (8), reaches the other corner (2A) of the rake face (2) opposite to the corner having the corner cutting edge (6) formed therein, and is recessed inward with respect to the extension line (L) of the sub-cutting edge (8) as seen from the top, and
wherein, as seen from the top, an angle (θ) of a tangential line (M) touching both ends of the connecting portion (8B) formed with respect to the extension line (L) of the sub-cutting edge (8) is larger in a range of 5° to 20° than an angle (δ) at which a side ridge (3A) of the second polygonal surface located on the opposite side to the side ridge having the sub-cutting edge (8) and the connecting portion (8B) formed therein is formed with respect to the extension line (L).

7. A throwaway type rotary cutting tool, wherein the throwaway insert according to any one of claims 1 to 6 is mounted to a tool body (11) rotated about an axis (0) such that the rake face (2) faces forward in a rotating direction of the tool, the corner cutting edge (6) is positioned at an outer periphery of a distal end of the tool body (11), and the main cutting edge (7) extends rearward in the rotating direction of the tool body (11) as the main cutting edge (7) approaches the rear end at the outer periphery of the tool body (11).

## Patentansprüche

1. Einwegeinlage mit einem Einlagekörper (1), der, von oben betrachtet, eine im Wesentlichen polygonale, flache Plattengestalt definiert, wobei die Einwegeinlage aufweist:
eine Neigungsfläche (2), die an einer ersten polygonalen Fläche des Einlagekörpers (1) ausgebildet ist,
eine Eckschneidkante (6), die an einer Ecke der Neigungsfläche (2) ausgebildet ist, und, von oben betrachtet, eine im Wesentlichen bogenförmige Gestalt aufweist, die zur ersten polygonalen Fläche des Einlagekörpers (1) weist,
eine Hauptschneidkante (7), die an einem mit einem Ende (6A) der Eckschneidkante (6) verbundenen Seitengrat der Neigungsfläche (2) ausgebildet ist, und
eine Entlastungsfläche (4), die durch eine Seitenfläche des Einlagekörpers (1) gebildet wird,
wobei die Einwegeinlage an einem Werkzeugkörper (11) befestigt ist, der um eine Achse (0) derart zu drehen ist, dass die Neigungsfläche (2) in einer Drehrichtung eines Werkzeugs nach vorne weist, die Eckschneidkante (6) an einem Außenumfang eines distalen Endes des Werkzeugkörpers (11) positioniert ist, und sich die Hauptschneidkante (7) in der Drehrichtung des Werkzeugkörpers (11) rückwärts erstreckt, während sich die Hauptschneidkante (7) dem Rückende des Werkzeugkörpers (11) am Außenumfang des Werkzeugkörpers (11) nähert,
bei der die mit der Hauptschneidkante (7) verbundene Neigungsfläche (2) eine schräge Fläche umfasst, die nach innen in Richtung der als eine Sitzfläche (3) zum Setzen am Werkzeugkörper (11) dienenden, zweiten polygonalen Fläche des Einlagekörpers (1) schräg ist,
bei der, im Querschnitt, ein Schrägwinkel der Neigungsfläche (2) bezüglich der Sitzfläche (3) fortschreitend von dem mit dem einen Ende (6A) der Eckschneidkante (6) verbundenen einen Ende (7A) der Hauptschneidkante (7) in Richtung des anderen Endes (7B) hiervon abnimmt, und ein Neigungswinkel (α, β, γ), der im Querschnitt durch die Neigungsfläche (2) und den Radius zwischen der Achse (0) und der Hauptschneidkante (7) bei der am Werkzeugkörper (11) befestigten Einlage ausgebildet ist, fortschreitend abnimmt und dann vom einen Ende (7A) der Hauptschneidkante (7) in Richtung des anderen Endes (7B) hiervon fortschreitend zunimmt,
bei der die Hauptschneidkante (7) in einer Gestalt einer konvex gekrümmten Linie ausgebildet ist, die, von oben betrachtet, in Richtung des Äußeren der Neigungsfläche (2) hervorsteht, und in einer Gestalt einer anderen konvex gekrümmten Linie, die sich in Richtung der Sitzfläche (3) erstreckt, während sie vom einen Ende (7A) der Hauptschneidkante zum anderen Ende (7B) hiervon konvex gekrümmt ist, und zwar von der zur Entlastungsfläche (4) weisenden Seite betrachtet, und
bei der, mit der am Werkzeugkörper (11) befestigten Einlage, eine Projektionslinie des Drehpunkts der Hauptschneidkante (7) um die Achse (0) eine Gestalt eines konvexen Bogens ausbildet, der am Mittenabschnitt (7C) der Hauptschneidkante (7) mit einer zylindrischen Fläche (P) sanft in Kontakt kommt, deren Mittenlinie der Achse (0) entspricht und der sich von der zylindrischen Fläche (P) fortschreitend nach innen zurückzieht, während er sich beiden Enden der Hauptschneidkante (7) nähert.

2. Einwegeinlage gemäß Anspruch 1, bei der, bezüglich der Rückzugsgrößen, um welche sich die beiden Enden der Projektionslinie der Hauptschneidkante (7) von der zylindrischen Fläche zurückziehen, das eine Ende der Hauptschneidkante (7) eine kleinere Rückzugsgröße als das am Außenumfang des Rückendes des Werkzeugkörpers (11) positionierte, andere Ende der Hauptschneidkante (7) aufweist.

3. Einwegeinlage gemäß Anspruch 1 oder 2, bei der eine vertiefte Fläche (9), die von der schrägen Fläche der Neigungsfläche (2) in Richtung der Sitzfläche (3) vertieft ist und eine konkave Querschnittsgestalt aufweist, inwärts der Neigungsfläche (2) ausgebildet ist, und sich um einen gesamten Innenumfang der Neigungsfläche (2) in einem Zustand erstreckt, in dem sie, von oben betrachtet, um im Wesentlichen das gleiche Intervall von der Hauptschneidkante getrennt ist.

4. Einwegeinlage gemäß einem der Ansprüche 1 bis 3, bei der die mit der Hauptschneidkante (7) verbundene Entlastungsfläche (4) eine erste Entlastungsfläche (4A) umfasst, die mit der Hauptschneidkante (7) verbunden ist und schräg ist, damit sie sich fortschreitend in Richtung der Sitzfläche (3) zurückzieht, und eine zweite Entlastungsfläche (4B) umfasst, die an der Seite der Sitzfläche (3) mit der ersten Entlastungsfläche (4A) verbunden ist und schräg ist, damit sie sich mit einem größeren Schrägwinkel als die erste Entlastungsfläche (4A) zurückzieht, und die erste und zweite Entlastungsfläche derart ausgebildet sind, dass sie sich in Richtung der Sitzfläche (3) erstrecken, während sie, von der Seite betrachtet, vom einen Ende (7A) der Hauptschneidkante (7) in Richtung des anderen Endes (7B) hiervon konvex gekrümmt sind.

5. Einwegeinlage gemäß Anspruch 4, bei der zumindest das eine Ende der Hauptschneidkante (7) mit einer planaren, dritten Entlastungsfläche (4D) ausgebildet ist, die an der Seite der Sitzfläche (3) mit der zweiten Entlastungsfläche (4B) verbunden ist und sich senkrecht zur Sitzfläche (3) erstreckt.

6. Einwegeinlage gemäß einem der Ansprüche 1 bis 5, bei welcher der Einlagekörper (1), von oben betrachtet, eine im Wesentlichen parallelogrammartige, flache Gestalt definiert, bei der ein mit dem anderen Ende (6B) der Eckschneidkante (6) verbundener Seitengrat der Neigungsfläche (2) mit einer sich vom anderen Ende (6B) der Eckschneidkante (6) in Richtung des Innenumfangs des Werkzeugkörpers (11) erstreckenden Unterschneidkante (8) ausgebildet ist, wobei die Einlage am Werkzeugkörper (11) befestigt ist,
und ein verbindender Abschnitt (8B), der mit der Unterschneidkante (8) verbunden ist, die andere Ecke (2A) der Neigungsfläche (2) gegenüber der Ecke erreicht, welche die Eckschneidkante (6) darin ausgebildet aufweist, und, von oben betrachtet, bezüglich der Verlängerungslinie (L) der Unterschneidkante (8) nach innen vertieft ist, und
bei der, von oben betrachtet, ein Winkel (Φ) der beide Enden des verbindenden Abschnitts (8B) berührenden Tangentiallinie (M), der bezüglich der Verlängerungslinie (L) der Unterschneidkante (8) ausgebildet ist, in einem Bereich von 5° bis 20° größer ist als ein Winkel (δ), bei dem ein Seitengrat (3A) der zweiten polygonalen Fläche, der an der gegenüberliegenden Seite zu dem die Unterschneidkante (8) und den verbindenden Abschnitt (8B) darin ausgeformt aufweisenden Seitengrat gelegen ist, bezüglich der Verlängerungslinie (L) ausgebildet ist.

7. Einwegdrehschneidwerkzeug, bei dem die Einwegeinlage gemäß einem der Ansprüche 1 bis 6 an einem um eine Achse (0) gedrehten Werkzeugkörper (11) derart befestigt ist, dass die Neigungsfläche (2) in Richtung einer Drehrichtung des Werkzeugs nach vorne weist, die Eckschneidkante (6) an einem Außenumfang eines distalen Endes des Werkzeugkörpers (11) positioniert ist, und sich die Hauptschneidkante (7) rückwärts in der Drehrichtung des Werkzeugkörpers (11) erstreckt, während sich die Hauptschneidkante (7) dem Rückende am Außenumfang des Werkzeugkörpers (11) nähert.

## Revendications

1. Plaquette jetable ayant un corps de plaquette (1) qui définit une forme de plaque plate substantiellement polygonale, vue du dessus, la plaquette jetable incluait :
une face de coupe (2) qui est formée sur une première surface polygonale du corps de plaquette (1),
un bord coupant de coin (6) qui est formé au niveau d'un coin de la face de coupe (2) et qui a une forme substantiellement en arc, vu du dessus, faisant face à la première surface polygonale du corps de plaquette (1),
un bord coupant principal (7) qui est formé au niveau d'une arête latérale de la face de coupe (2) connectée à une extrémité (6A) du bord coupant de coin (6), et
une face de dépouille (4) qui est constituée par une face latérale du corps de plaquette (1),
la plaquette jetable étant montée sur un corps d'outil (11) qui est destiné à être mis en rotation autour d'un axe (0) de telle façon que la face de coupe (2) fait face vers l'avant dans un sens de rotation d'un outil, le bord coupant de coin (6) est positionné au niveau d'une périphérie extérieure d'une extrémité distale du corps d'outil (11), et le bord coupant principal (7) s'étend vers l'arrière dans le sens de rotation du corps d'outil (11) lorsque le bord coupant principal (7) approche de l'extrémité arrière du corps d'outil (11) au niveau de la périphérie extérieure du corps d'outil (11),
dans laquelle la face de coupe (2) connectée au bord coupant principal (7) comprend une face inclinée qui est inclinée vers l'intérieur vers la deuxième surface polygonale du corps de plaquette (1) servant comme une face de siège (3) pour reposer sur le corps d'outil (11),
dans laquelle, en coupe transversale, un angle d'inclinaison de la face de coupe (2) par rapport à la face de siège (3) diminue graduellement d'une extrémité (7A) du bord coupant principal (7) connectée à l'une extrémité (6A) du bord coupant de coin (6) vers l'autre extrémité (7B) de celui-ci, et un angle de coupe (α, β, γ) qui est formé en coupe transversale par la face de coupe (2) et le rayon entre l'axe (0) et le bord coupant principal (7), avec la plaquette montée sur le corps d'outil (11), diminue graduellement et ensuite augmente graduellement d'une extrémité (7A) du bord coupant principal (7) vers l'autre extrémité (7B) de celui-ci,
dans laquelle le bord coupant principal (7) est formé en une forme d'une ligne incurvée de façon convexe qui fait saillie vers l'extérieur de la face de coupe (2), vue du dessus, et une forme d'une autre ligne incurvée de façon convexe qui s'étend vers la face de siège (3) tout en étant incurvée de façon convexe de l'une extrémité (7A) du bord coupant principal jusqu'à l'autre extrémité (7B) de celui-ci, vu du côté faisant face à la face de dépouille (4), et
dans laquelle, avec la plaquette montée sur le corps d'outil (11), une ligne de projection d'un lieu géométrique de rotation du bord coupant principal (7) autour de l'axe (0) forme une forme d'un arc convexe qui vient doucement, au niveau d'une partie médiane (7C) du bord coupant principal (7), en contact avec une surface cylindrique (P) ayant sa ligne centrale correspondant à l'axe (0) et qui se retire graduellement vers l'intérieur à partir de la surface cylindrique (P) lorsqu'il approche des deux extrémités du bord coupant principal (7).

2. Plaquette jetable selon la revendication 1, dans laquelle, pour ce qui concerne les quantités de retrait desquelles les deux extrémités de la ligne de projection du bord coupant principal (7) se retirent de la surface cylindrique, l'une extrémité du bord coupant principal (7) a une quantité de retrait plus petite que l'autre extrémité du bord coupant principal (7) qui est positionnée au niveau de la périphérie extérieure de l'extrémité arrière du corps d'outil (11).

3. Plaquette jetable selon la revendication 1 ou 2, dans laquelle une face en renfoncement (9), qui est en renfoncement de la face inclinée de la face de coupe (2) vers la face de siège (3) et a une forme concave en coupe transversale, est formée vers l'intérieur de la face de coupe (2), et s'étend autour de la totalité d'une périphérie intérieure de la face de coupe (2) dans un état dans lequel elle est séparée de substantiellement le même intervalle du bord coupant principal, vue du dessus.

4. Plaquette jetable selon l'une quelconque des revendications 1 à 3, dans laquelle la face de dépouille (4) connectée au bord coupant principal (7) comprend une première face de dépouille (4A) qui est connectée au bord coupant principal (7) et est inclinée pour graduellement se retirer vers la face de siège (3), et une deuxième face de dépouille (4B) qui est connectée à la première face de dépouille (4A) sur le côté de la face de siège (3) et est inclinée pour graduellement se retirer selon un angle d'inclinaison plus grand que la première face de dépouille (4A), et la première et la deuxième faces de dépouille sont formées de telle façon qu'elles s'étendent vers la face de siège (3) tout en étant incurvées de façon convexe de l'une extrémité (7A) du bord coupant principal (7) vers l'autre extrémité (7B) de celui-ci, vues de côté.

5. Plaquette jetable selon la revendication 4, dans laquelle au moins l'une extrémité du bord coupant principal (7) est formée avec une troisième face de dépouille (4D) plane qui est connectée à la deuxième face de dépouille (4B) sur le côté de la face de siège (3) et s'étend perpendiculairement à la face de siège (3).

6. Plaquette jetable selon l'une quelconque des revendications 1 à 5, dans laquelle le corps de plaquette (1) définit une forme plate substantiellement parallélogrammatique, vu du dessus, dans laquelle une arête latérale de la face de coupe (2) connectée à l'autre extrémité (6B) du bord coupant de coin (6) est formée avec un sous-bord coupant (8) s'étendant de l'autre extrémité (6B) du bord coupant de coin (6) vers la périphérie intérieure du corps d'outil (11) avec la plaquette montée sur le corps d'outil (11), et une partie de connexion (8B), qui est connectée au sous-bord coupant (8), atteint l'autre coin (2A) de la face de coupe (2) opposé au coin ayant le bord coupant de coin (6) formé dans celui-ci, et est en renfoncement vers l'intérieur par rapport à la ligne d'extension (L) du sous-bord coupant (8), vue du dessus, et
dans laquelle, vu du dessus, un angle (θ) d'une ligne tangentielle (M) touchant les deux extrémités de la partie de connexion (8B) formée par rapport à la ligne d'extension (L) du sous-bord coupant (8) est plus grand dans une plage de 5° à 20° qu'un angle (δ) au niveau duquel une arête latérale (3A) de la deuxième surface polygonale située sur le côté opposé à l'arête latérale ayant le sous-bord coupant (8) et la partie de connexion (8B) formée dans celui-ci est formé par rapport à la ligne d'extension (L).

7. Outil de coupe rotatif de type jetable, dans lequel la plaquette jetable selon l'une quelconque des revendications 1 à 6 est montée sur un corps d'outil (11) tournant autour d'un axe (0) de telle façon que la face de coupe (2) fait face vers l'avant dans un sens de rotation de l'outil, le bord coupant de coin (6) est positionné au niveau d'une périphérie extérieure d'une extrémité distale du corps d'outil (11), et le bord coupant principal (7) s'étend vers l'arrière dans le sens de rotation du corps d'outil (11) lorsque le bord coupant principal (7) approche de l'extrémité arrière au niveau de la périphérie extérieure du corps d'outil (11).
